# DEMANDE DE BREVET EUROPEEN

(11) **EP 1 168 643 A1**
(43) Date de publication de la demande: **02.01.2002**
(21) Numéro de dépôt: 01401499.7
(22) Date de dépôt: 11.06.2001
(51) Int. Cl.: H04B 1/38, A45F 5/02

(54) **Dispositif de fixation pour appareil de télécommunication mobile**

(30) Priorité: 26.06.2000 FR 0008152
(71) Demandeur: ALCATEL, 75008 Paris (FR)
(72) Inventeur: Beune, Olivier, 92190 Meudon (FR); Vermelle, Eric, 92700 Colombes (FR)
(74) Mandataire: Lamoureux, Bernard

(57) **Abrégé**

L'invention est relative à un dispositif de fixation pour un appareil (1) de télécommunication mobile, comprenant des moyens de couplage (9) dudit dispositif (6) à l'appareil et des moyens de fixation (8, 11, 81) du dispositif à un vêtement ou une ceinture.

Selon l'invention, l'appareil étant pourvu d'un orifice (4) avec au moins un connecteur (5) pour la connexion à une antenne extérieure du type de celle d'un véhicule automobile, les moyens de couplage sont conformés de manière à pouvoir coopérer avec l'orifice par recouvrement du connecteur.

## Description

La présente invention est relative au domaine des dispositifs de fixation pour les appareils de télécommunication mobile et concerne plus particulièrement un dispositif de fixation pour un appareil de télécommunication mobile, comprenant des moyens de couplage dudit dispositif à l'appareil et des moyens de fixation du dispositif à un vêtement ou une ceinture.

Il est courant d'utiliser des dispositifs de fixation, appelés usuellement clips de poche, pour la fixation au niveau de la poche de la veste, de la chemise ou de la ceinture de l'utilisateur, d'un téléphone mobile.

Un clip de poche est en général constitué d'une pince. Celle-ci est formée d'une part d'un corps comprenant un moyen pour coopérer avec un moyen correspondant de la face arrière du téléphone prévu pour le couplage de la pince et du téléphone. La pince comporte d'autre part une languette sur laquelle une pression exercée par l'utilisateur permet le décrochage du tissu de la ceinture. De cette sorte, le clip, fixé à la ceinture, par exemple, tient à celle-ci grâce au poids de l'appareil dont il est solidaire.

Cependant, un tel clip est un accessoire qui n'assure pour le téléphone qu'une fonction de fixation telle que nous venons de le voir.

L'invention a pour but d'associer à la fonction de fixation qu'assure un dispositif de fixation tel que défini dans le préambule de la présente demande, une seconde fonction technique assuré dans l'état de la technique par un accessoire séparé.

A cet effet, l'invention a pour objet un dispositif de fixation pour un appareil de télécommunication mobile, comprenant des moyens de couplage dudit dispositif à l'appareil et des moyens de fixation du dispositif à un vêtement ou une ceinture, caractérisé en ce que, l'appareil étant pourvu d'un orifice avec au moins un connecteur pour la connexion à une antenne extérieure du type de celle d'un véhicule automobile, les moyens de couplage sont conformés de manière à pouvoir coopérer avec l'orifice par recouvrement du connecteur.

Ainsi, l'invention permet de remplacer le bouchon de protection qui est usuellement disposé dans l'orifice lorsque celui-ci n'est pas utilisé. Elle rend de ce fait ce bouchon inutile et procure un avantage particulier tant aux industriels qui n'ont plus besoin de fabriquer et de fournir de tels bouchons qu'à l'utilisateur final dont l'attention n'est plus perturbé par le risque de perte d'un tel accessoire miniature.

L'invention, en plus de sa fonction de fixation, remplit une fonction de protection contre les chocs que pourrait subir le connecteur RF et les déperditions de signaux que celui-ci provoquerait si l'orifice était maintenu ouvert à l'espace libre lorsqu'il n'est pas utilisé. En outre, comme les moyens de couplage de l'invention coopèrent par recouvrement sur le connecteur RF, celui-ci est également caché, ce qui permet d'améliorer l'esthétique du dispositif et rajoute au succès commercial de ce dernier.

Selon un mode de réalisation, le connecteur étant constitué d'une fiche, les moyens de couplage comportent un manchon d'accouplement.

Selon un mode de réalisation, les moyens de couplage comportent une pluralité d'arcs suivant le périmètre d'un cercle.

Selon un mode de réalisation, le dispositif selon l'invention comporte une branche à coupler à l'appareil selon lesdits moyens de couplage et une branche à fixer au vêtement ou à la ceinture selon lesdits moyens de fixation, les deux branches étant reliées à une première extrémité commune, la seconde extrémité de la branche à coupler à l'appareil étant libre et présentant les moyens de couplage sur sa face externe.

Selon un mode de réalisation, la constitution et la forme de l'extrémité libre de la branche à fixer au vêtement ou à la ceinture sont telles que celle-ci est capable d'exercer une force de rappel vers l'autre sens quand le vêtement ou la ceinture est introduit entre les deux branches.

Selon un mode de réalisation, la branche à coupler à l'appareil étant plus courte que la branche à fixer au vêtement ou à la ceinture, les deux branches sont sensiblement parallèles sur une longueur commune et le prolongement de la branche la plus longue vers son extrémité libre présente une courbure orientée vers l'autre branche de manière à ramener cette extrémité libre sensiblement dans le même plan que la branche la plus courte.

Selon un mode de réalisation, pour accentuer ladite force de rappel, l'extrémité libre de la branche à fixer au vêtement ou à la ceinture présente des moyens pour réduire l'espace libre entre cette extrémité et la face arrière de l'appareil lorsque le dispositif de fixation selon l'invention est couplé à l'appareil. Par exemple, ces moyens de réduction de l'espace libre consistent en des parties saillantes sur la face interne de la branche à fixer au vêtement ou à la ceinture conformées de manière à contribuer à la force de rappel de manière uniforme.

Selon un mode de réalisation, le dispositif de fixation selon l'invention comporte des moyens de maintien dudit dispositif sur l'appareil.

Selon un mode de réalisation, ces moyens de maintien consistent en un collier rigide entourant l'antenne externe de l'appareil.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- la figure 1 : une vue arrière d'un téléphone mobile classique,
- la figure 2 : une perspective d'un dispositif de fixation selon un mode de réalisation de l'invention,
- la figure 3 : une perpective en vue arrière d'un téléphone mobile muni du dispositif de fixation de la figure 2.

Dans la présente demande, des éléments remplissant des fonctions identiques sur des figures différentes porteront des mêmes références.

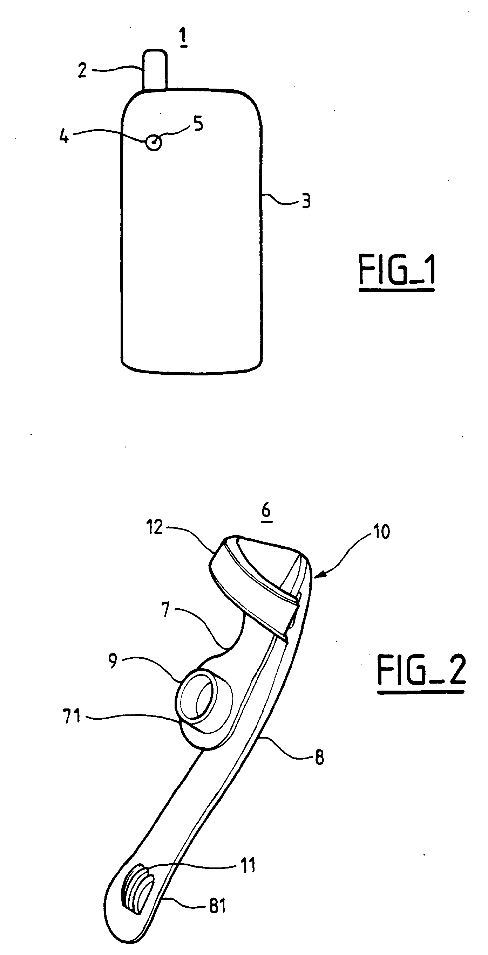

Il est illustré sur la figure 1 la face arrière d'un téléphone mobile classique. Celle-ci fait apparaître une antenne 2 externe reliée à un émetteur/récepteur (usuellement appelé transmetteur, non représenté) interne au boîtier 3 du téléphone et permettant les communications bidirectionnelles avec le réseau. Cette antenne est couramment recouverte d'un revêtement en plastique pour des raisons esthétiques et de protection contre les agressions de l'environnement (chocs, pluie, etc).

Il arrive que l'utilisateur du téléphone se trouve dans un lieu également équipé d'une antenne extérieure, par exemple à l'intérieur d'un véhicule automobile. Pour pouvoir recevoir/émettre un signal de meilleur qualité, il est courant de relier, via un câble coaxial, un orifice 4 pourvu d'un connecteur 5 radiofréquence à l'antenne extérieure du véhicule. Ce connecteur 5 est relié au transmetteur du téléphone, ce qui lui permet d'acheminer les signaux de communication. En général, l'utilisateur utilise un porte-téléphone ("car-kit" en langue anglaise) fixé au voisinage du volant pour des raisons de confort et dans lequel le téléphone est placé. Lors de son insertion dans le porte-téléphone, une connexion électrique est faite entre le connecteur et un moyen correspondant du porte-téléphone. Ce moyen est par ailleurs relié à un câble relié lui-même à l'antenne du véhicule.

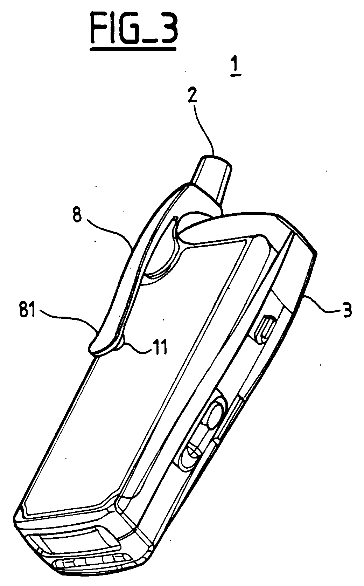

La figure 2 représente une perspective d'un dispositif de fixation 6 selon un mode de réalisation de l'invention. Celui-ci comprend une première branche 7 et une seconde branche 8 plus longue que la première. Les deux branches sont reliés au niveau d'un extrémité commune 10 alors que leurs autres extrémités respectives 71, 81 sont libres. La branche 7 est destinée à être couplée au téléphone 1. Ceci est réalisé au moyen d'un manchon 9 d'accouplement disposé sur la face externe de l'extrémité libre de la branche 7 et s'insérant dans l'orifice 4 du téléphone 1, comme le montre la figure 3. Ce manchon de forme cylindrique creuse à un diamètre tel qu'il puisse être effectivement inséré dans l'orifice 4 cylindrique, tout en recouvrant le connecteur 5, permettant ainsi sa protection comme il a été dit plus haut. Bien entendu, selon des variantes non représentées, il peut être envisagé d'autres moyens de couplage selon l'invention à la place du manchon 9, tels que deux demi-lunes, une pluralité d'arcs longeant le périmètre d'un cercle dont le diamètre est inférieur à celui de l'orifice 4, ceci afin de permettre leur insertion dans l'orifice.

La seconde branche 8 est dans un plan sensiblement parallèle à la première sur la longueur de la première branche 7 et son prolongement vers son extrémité libre 81 présente une courbure orientée vers la branche 7 de manière à ramener l'extrémité 81 sensiblement sur un même plan que celui de la première branche 7. Ainsi, lorsque le manchon est inséré dans l'orifice tel qu'illustré sur la figure 3 et lorsque le tissu de la chemise de l'utilisateur est inséré entre les deux branches, l'extrémité 81 applique une force de rappel sur le tissu pour le contraindre contre la face arrière du téléphone. Ainsi, le tissu est serré entre les deux branches et le dos du téléphone et ne risque pas de chuter. Par ailleurs, une pression exercée par l'utilisateur dans le sens opposée à la force de rappel permet d'obtenir le décrochage du tissu de la chemise. La constitution de la branche de rappel est étudiée de sorte à permettre cette fonction de serrage mais également à résister à des effets de torsion. Par exemple, le dispositif est fait d'un seul bloc moulé en plastique, ce qui permet également de l'obtenir suite à un seul processus de fabrication. Ceci est un avantage supplémentaire de l'invention par rapport à l'art antérieur où il était indispensable de fabriquer le bouchon de manière séparée.

L'extrémité 81 présente en outre sur sa face interne orientée vers la branche 7 des arches 11 pleines. Ces arches permettent de contribuer de façon positive à la force de pincement du vêtement placé entre les deux branches puisqu'elles réduisent l'espace libre entre l'extrémité libre 81 et la face arrière du téléphone.

Le dispositif de fixation 6 comporte au niveau de l'extrémité commune aux deux branches un collier de maintien 12 qui sert à maintenir rigide la liaison entre le dispositif 6 et le téléphone. L'utilisateur enfile ce collier par la partie supérieure de l'antenne 2 puis le bloque au niveau de la base de l'antenne 2. Une pression subséquente sur le dos du manchon permet de boucher l'orifice 4 et de placer l'ensemble dans l'état tel qu'illustré sur la figure 3, prêt à être fixé à un vêtement ou une ceinture.

Bien entendu, l'invention n'est pas limitée au mode de réalisation décrit ci-dessus. Comme expliqué ci-dessus, les moyens de couplage peuvent être de toute forme possible. Les arches 11 peuvent être remplacées par tout autre moyen placé sur la face interne de l'extrémité 81 permettant de réduire l'espace libre entre l'extrémité libre 81 et la face arrière du téléphone. On peut même y ajouter des moyens d'adhésion de cette extrémité sur le tissu d'un vêtement ou une ceinture.

## Revendications

1. Dispositif de fixation pour un appareil (1) de télécommunication mobile, comprenant des moyens de couplage (9) dudit dispositif (6) à l'appareil et des moyens de fixation (8, 11, 81) du dispositif à un vêtement ou une ceinture, **caractérisé en ce que**, l'appareil étant pourvu d'un orifice (4) avec au moins un connecteur (5) pour la connexion à une antenne extérieure du type de celle d'un véhicule automobile, les moyens de couplage sont conformés de manière à pouvoir coopérer avec l'orifice par recouvrement du connecteur.

2. Dispositif selon la revendication 1, **caractérisé en ce que**, le connecteur étant constitué d'une fiche (5), les moyens de couplage comportent un manchon d'accouplement (9).

3. Dispositif selon la revendication 1, **caractérisé en ce que** les moyens de couplage comportent une pluralité d'arcs suivant le périmètre d'un cercle.

4. Dispositif selon l'une des revendications 1 à 3, **caractérisé en ce qu'**il comporte une branche (7) à coupler à l'appareil selon lesdits moyens de couplage et une branche (8) à fixer au vêtement ou à la ceinture selon lesdits moyens de fixation, les deux branches étant reliées à une première extrémité commune (10), la seconde extrémité (71) de la branche à coupler à l'appareil étant libre et présentant les moyens de couplage sur sa face externe.

5. Dispositif selon la revendication 4, **caractérisé en ce que** la constitution et la forme de l'extrémité libre (81) de la branche (8) à fixer au vêtement ou à la ceinture sont telles que celle-ci est capable d'exercer une force de rappel vers l'autre sens quand le vêtement ou la ceinture est introduit entre les deux branches.

6. Dispositif selon l'une des revendications 4 ou 5, **caractérisé en ce que** la branche à coupler à l'appareil étant plus courte que la branche à fixer au vêtement ou à la ceinture, les deux branches sont sensiblement parallèles sur une longueur commune et le prolongement de la branche la plus longue vers son extrémité libre présente une courbure orientée vers l'autre branche de manière à ramener cette extrémité libre sensiblement dans le même plan que la branche la plus courte.

7. Dispositif selon l'une des revendications 4 à 6, **caractérisé en ce que** l'extrémité libre de la branche à fixer au vêtement ou à la ceinture présente des moyens (11) pour réduire l'espace libre entre cette extrémité et la face arrière de l'appareil lorsque le dispositif de fixation selon l'invention est couplé à l'appareil.

8. Dispositif selon la revendication 7, **caractérisé en ce que** les moyens de réduction de l'espace libre consistent en des parties saillantes (11) sur la face interne de la branche à fixer au vêtement ou à la ceinture conformées de manière à contribuer à la force de rappel de manière uniforme.

9. Dispositif selon l'une des revendications précédentes, **caractérisé en ce qu'**il comporte des moyens de maintien (12) dudit dispositif sur l'appareil.

10. Dispositif selon la revendication 9, **caractérisé en ce que** les moyens de maintien consistent en un collier rigide entourant l'antenne externe de l'appareil.
